# EUROPÄISCHE PATENTSCHRIFT

(11) **EP 3 667 105 B1**
(45) Veröffentlichungstag und Bekanntmachung des Hinweises auf die Patenterteilung: **01.01.2025**
(21) Anmeldenummer: 19208149.5
(22) Anmeldetag: 08.11.2019
(51) Int. Cl.: F16B 13/14, F16B 13/12

(54) **KUNSTSTOFFSPREIZDÜBEL, VERFAHREN ZUM BEFESTIGEN EINER SCHRAUBE UND EINES KUNSTSTOFFSPREIZDÜBELS UND ANORDNUNG MIT EINEM KUNSTSTOFFSPREIZDÜBEL**
PLASTIC EXPANSION PLUG, METHOD FOR FIXING A SCREW AND A PLASTIC EXPANSION PLUG AND ARRANGEMENT COMPRISING A PLASTIC EXPANSION PLUG
CHEVILLE À EXPANSION EN MATIÈRE PLASTIQUE, PROCÉDÉ DE FIXATION D'UNE VIS ET D'UNE CHEVILLE À EXPANSION EN MATIÈRE PLASTIQUE ET DISPOSITIF DOTÉ D'UNE CHEVILLE À EXPANSION EN MATIÈRE PLASTIQUE

(30) Priorität: 12.12.2018 DE 102018221504
(43) Veröffentlichungstag der Anmeldung: 17.06.2020
(73) Patentinhaber: Adolf Würth GmbH & Co. KG, 74653 Künzelsau (DE); Würth International AG, 7000 Chur (CH)
(72) Erfinder: Albert, Aliz, 74653 Künzelsau (DE); Müßig, Matthias, 74523 Schwäbisch Hall (DE); Wieland, Achim, 74211 Leingarten (DE)
(74) Vertreter: Patentanwälte Ruff, Wilhelm, Beier, Dauster & Partner mbB

(56) Entgegenhaltungen:
- EP-A1- 2 333 154
- DE-A1- 102013 104 506
- DE-A1- 102016 218 880
- GB-A- 1 425 852
- US-A- 4 893 974

## Beschreibung

Die Erfindung betrifft eine Anordnung mit einem erfindungsgemäßen Kunststoffspreizdübel, einer Schraube und einem Bohrloch in einem Gegenstand, insbesondere einer Gebäudewand, wobei der Kunststoffspreizdübel wenigstens abschnittsweise in dem Bohrloch und die Schraube abschnittsweise in dem Kunststoffspreizdübel angeordnet ist.

In Räumen mit erhöhter Feuchtigkeit, insbesondere in Bereichen wie Dusche und Bad, muss durch geeignete Systeme eine Abdichtung zur Gebäudewand gewährleistet werden. Dies ist in der DIN 18534 geregelt. Wenn dann nachträglich Bauteile an der Wand befestigt werden sollen, wird ein Bohrloch hergestellt, ein Kunststoffspreizdübel eingesetzt und das Bauteil befestigt. Dadurch wird aber die Abdichtung durch das Bohrloch punktuell durchbrochen und es wird eine mögliche Leckage erzeugt. Wenn die geltende Norm strikt befolgt wird, muss für eine geeignete Abdichtung des Bohrlochs gesorgt werden.

Die DE 10 2016 218 880 A1 offenbart einen Dübel zur Befestigung in einem Wärmedämmverbundsystem mit einem hohlen Schaft und einem Dichtelement, das an einem Ende des hohlen Schafts angeordnet ist. Das Dichtelement ist kraftschlüssig in einem Bohrloch der Putzschicht des Wärmedämmverbundsystems aufnehmbar.

Die GB 1 425 852 offenbart einen Dübel mit einem Zweikomponentenklebstoff, wobei mindestens eine der Klebstoffkomponenten mikroverkapselt ist.

Die US 4,893,974 offenbart einen Dübel zum Befestigen von Gegenständen.

Mit der Erfindung soll eine Anordnung mit einem Kunststoffspreizdübel, einer Schraube und einem Bohrloch in einem Gegenstand dahingehend verbessert werden, dass eine einfache Handhabung und eine zuverlässige Abdichtung gegenüber dem Eindringen von Feuchtigkeit in das Bohrloch gewährleistet ist.

Erfindungsgemäß ist hierzu eine Anordnung mit den Merkmalen von Anspruch 1 vorgesehen. Es ist eine Anordnung mit einem Kunststoffspreizdübel mit einem nicht spreizbaren Hülsenabschnitt und einem, sich ausgehend vom Hülsenabschnitt erstreckenden Spreizabschnitt vorgesehen, wobei der Hülsenabschnitt und der Spreizabschnitt ein Sackloch definieren, bei dem das Sackloch im Spreizabschnitt eine geschlossene Wand aufweist und bei dem in der Umfangswand des Hülsenabschnitts wenigstens eine Durchtrittsöffnung für Dichtmittel vorgesehen ist.

Auf überraschend einfache Weise wird dadurch ermöglicht, dass beim Eindrehen einer Schraube in das Sackloch des Kunststoffspreizdübels vorher in das Sackloch eingebrachtes Dichtmittel durch die Schraube verdrängt wird und durch die wenigstens eine Durchtrittsöffnung in der Umfangswand des Hülsenabschnitts in einen Bereich zwischen der Umfangswand des Hülsenabschnitts und einer Innenwand des Bohrlochs austritt. Dadurch kann durch einfaches Eindrehen der Schraube das Dichtmittel genau in dem Bereich angeordnet werden, in dem eine Abdichtung erforderlich ist, nämlich zwischen der Umfangswand des Hülsenabschnitts und der Innenwand des Bohrlochs. Darüber hinaus wird das Dichtmittel zwangsläufig auch zwischen dem Schaft der Schraube und der Innenwand des Sacklochs des Kunststoffspreizdübels angeordnet werden. Auch dieser Zwischenraum ist dann zuverlässig gegenüber dem Eindringen von Feuchtigkeit in das Bohrloch abgedichtet. Es ist dabei aber zu berücksichtigen, dass die Abdichtung zwischen dem Schaft der Schraube und der Innenwand des Sacklochs des Kunststoffspreizdübels in der Regel unkritisch ist. Der Schaft der Schraube wird beim Eindrehen zwangsläufig gegen die Innenwand des Sacklochs gepresst und sorgt bereits dadurch für eine zuverlässige Abdichtung. Gerade der kritische Bereich zwischen dem Hülsenabschnitt und dem Bohrloch wird durch den erfindungsgemäßen Kunststoffspreizdübel aber in sehr einfacher Weise zuverlässig abgedichtet.

Erfindungsgemäß ist die wenigstens eine Durchtrittsöffnung im ersten Endbereich des Hülsenabschnitts vorgesehen, wobei der erste Endbereich des Hülsenabschnitts an ein offenes Ende des Kunststoffspreizdübels angrenzt.

Auf diese Weise kann sich das Dichtmittel unmittelbar nach dem Austritt aus der Durchtrittsöffnung im Bereich des offenen Endes des Kunststoffspreizdübels zwischen der Innenwand des Bohrlochs und der Außenwand des Kunststoffspreizdübels ausbreiten und damit in diesem Bereich, also unmittelbar zu Beginn des Bohrlochs, für eine zuverlässige Abdichtung sorgen.

In Weiterbildung der Erfindung ist wenigstens eine weitere Durchtrittsöffnung in einem mittleren Bereich und/oder in einem zweiten Endbereich des Hülsenabschnitts vorgesehen, wobei der zweite Endbereich des Hülsenabschnitts an den Spreizbereich angrenzt.

Auf diese Weise kann über eine größere Länge des Hülsenabschnitts, insbesondere über die vollständige Länge des Hülsenabschnitts, ein Austritt von Dichtmittel und damit eine Abdichtung des Zwischenraums zwischen dem Bohrloch und dem Kunststoffspreizdübel bewirkt werden.

Gemäß der Erfindung ist in dem Sackloch ein Dichtmittelvorrat, insbesondere Silikon, angeordnet.

Der Dichtmittelvorrat kann vor dem Eindrehen der Schraube in den Kunststoffspreizdübel eingebracht werden, beispielsweise eingespritzt werden. Dies kann im Rahmen der Erfindung vor dem Einsetzen des Kunststoffspreizdübels in das Bohrloch oder auch erst nach dem Einbringen des Kunststoffspreizdübels in das Bohrloch erfolgen. Im Rahmen der Erfindung kann der Kunststoffspreizdübel auch bereits bei der Herstellung mit einem Dichtmittelvorrat versehen werden. Das Dichtmittel muss spätestens durch Eindrehen der Schraube pastös oder flüssig werden, um durch die Durchtrittsöffnung austreten zu können. Da beim Eindrehen der Schraube aber erhebliche Druckkräfte erzeugt werden, kann auch ein vergleichsweise dickflüssiges oder pastöses Dichtmittel durch die Durchtrittsöffnung hindurchgedrückt werden.

In Weiterbildung der Erfindung ist der Dichtmittelvorrat in einem Folienbeutel angeordnet, der im Sackloch positioniert ist.

Ein solcher Folienbeutel wird beim Eindrehen der Schraube aufgerissen, so dass das Dichtmittel dann zunächst im Sackloch des Kunststoffspreizdübels angeordnet ist und dann durch die Schraube wenigstens teilweise aus dem Sackloch verdrängt wird und dann durch die Durchtrittsöffnung in dem Hülsenabschnitt in den Bereich zwischen dem Hülsenabschnitt und dem Bohrloch austritt und dort für eine zuverlässige Abdichtung sorgt. Der Folienbeutel kann bei der Herstellung des Dübels eingebracht werden, unmittelbar vor dem Einsetzen des Kunststoffspreizdübels in das Bohrloch oder auch erst nach dem Einsetzen des Kunststoffspreizdübels in das Bohrloch.

In Weiterbildung der Erfindung ist der Dichtmittelvorrat zwischen einem geschlossenen Ende des Sacklochs und einer sich über den Querschnitt des Sacklochs erstreckenden Membran oder zwischen zwei sich über den Querschnitt des Sacklochs erstreckenden Membranen angeordnet.

Auf diese Weise kann der Dichtmittelvorrat bereits während der Herstellung des Kunststoffspreizdübels in dem Sackloch des Kunststoffspreizdübels angeordnet werden. Durch Verschließen mit wenigstens einer Membran kann dabei sichergestellt werden, dass das Dichtmittel während einer Lagerzeit des Kunststoffspreizdübels nicht austrocknet oder aushärtet. Als Membran im Sinne der Erfindung kann auch ein Verschlussdeckel verstanden werden, der nach dem Einbringen des Dichtmittelvorrats in das Sackloch eingesetzt wird und der aber beim Eindrehen einer Schraube in das Sackloch zerstört werden kann. Im Rahmen der Erfindung kann ein solcher Verschlussstopfen auch vor dem Eindrehen der Schraube herausgenommen werden. Bevorzugt ist aber, dass die Membran bzw. der Verschlussstopfen beim Eindrehen der Schraube zerstört wird, um die Handhabung des erfindungsgemäßen Kunststoffspreizdübels zu erleichtern.

In Weiterbildung der Erfindung ist am offenen Ende des Kunststoffspreizdübels ein umlaufender, sich in radialer Richtung erstreckender Dichtkragen vorgesehen, der wenigstens abschnittsweise aus gummielastischem Material besteht oder mit einer Dichtscheibe aus gummielastischem Material versehen ist.

Beispielsweise ist wenigstens auf der dem Hülsenabschnitt und damit im montierten Zustand einer Gebäudewand zugewandten Seite des Dichtkragens gummielastisches Material, beispielsweise eine Gummischeibe, vorgesehen. Mittels eines umlaufenden, sich in radialer Richtung erstreckenden Dichtkragens kann zum einen eine zusätzlich zu dem Dichtmittel wirkende Abdichtung des Bohrlochs erreicht werden und zum anderen kann durch den Dichtkragen auch verhindert werden, dass das beim Eindrehen der Schraube in den Bereich zwischen dem Kunststoffspreizdübel und dem Bohrloch austretende Dichtmittel auf die Oberfläche der Gebäudewand oder des Gegenstands, in der das Bohrloch angeordnet ist, austritt und dort beispielsweise unschöne Flecken verursacht. Es ist im Rahmen der Erfindung auch vorgesehen, eine Gummischeibe über den Dichtkragen zu stülpen. Die Dichtscheibe kann auch mit einer Art Bajonettverschluss befestigt oder in sonstiger Weise im Schraubkanal des Dübels gehalten werden. Durch das Eindrehen der Schraube wird dann der innere Kanal zwischen der Innenwand des Kunststoffspreizbügels und dem Schraubenschaft abgedichtet und durch das Festziehen der Schraube und das dadurch erfolgende Andrücken des Dichtkragens gegen die Gebäudewand wird der äußere Kanal zwischen dem Bohrloch und der Außenwand des Kunststoffspreizbügels abgedichtet. Eine solche Dichtscheibe kann innenliegend ein Loch für die Schraube mit einem Kragen nach innen haben. Die Dichtscheibe kann auch komplett geschlossen sein, so dass sie mit der Spitze der Schraube durchdrungen werden muss.

In Weiterbildung der Erfindung ist der Kunststoffspreizdübel aus zwei verschiedenen Kunststoffmaterialen gebildet, wobei wenigstens eines der Kunststoffmaterialien ein gummielastisches Material ist.

Auf diese Weise kann eine zusätzliche Abdichtung zum Bohrloch hergestellt werden. Das gummielastische Material kann auch so ausgebildet und angeordnet sein, dass der Spreizbereich des Kunststoffspreizdübels beim Eindrehen einer Schraube gespreizt werden kann, ohne dass die Umfangswand des Sacklochs aufgerissen wird.

In Weiterbildung der Erfindung ist der Kunststoffspreizdübel mittels eines Zweikomponentenspritzverfahrens hergestellt.

Auf diese Weise lässt sich der erfindungsgemäße Kunststoffspreizdübel kostengünstig in großen Stückzahlen herstellen.

Bei einem Verfahren zum Befestigen einer Schraube und eines erfindungsgemäßen Kunststoffspreizdübels in einem Bohrloch sind folgende Schritte vorgesehen: Einbringen eines Dichtmittelvorrats, insbesondere Silikon, in das durch den Hülsenabschnitt und den Spreizabschnitt definierte Sackloch, Einsetzen des Kunststoffspreizdübels in das Bohrloch und Eindrehen einer Schraube in das Sackloch, so dass der Dichtmittelvorrat mittels der Schraube wenigstens teilweise aus dem Sackloch verdrängt wird und durch die wenigstens eine Durchtrittsöffnung wenigstens in einen Zwischenraum zwischen dem Bohrloch und einer Umfangswand des Hülsenabschnitts austritt.

Durch Austreten des Dichtmittelvorrats durch die Durchtrittsöffnung in den Zwischenraum zwischen dem Bohrloch und dem Kunststoffspreizdübel kann eine zuverlässige Abdichtung des Bohrlochs gegenüber eindringender Feuchtigkeit bewirkt werden. Das Dichtmittel kann dabei bereits unmittelbar nach der Herstellung des Kunststoffspreizdübels in diesen eingebracht werden. Es ist im Rahmen der Erfindung aber auch möglich, das Dichtmittel erst kurz vor dem Einsetzen des Kunststoffspreizdübels in das Bohrloch in diesen einzubringen, beispielsweise einzuspritzen, oder das Dichtmittel erst dann in das Sackloch des Kunststoffspreizdübels einzubringen, wenn dieser bereits im Bohrloch platziert ist.

Das Einbringen des Dichtmittelvorrats kann mittels Einschieben eines mit Dichtmittel gefüllten Folienbeutels in das Sackloch erfolgen.

Ein solcher Folienbeutel reißt beim Eindrehen einer Schraube in den Kunststoffspreizdübel auf und das darin enthaltene Dichtmittel wird dann durch die wenigstens eine Durchtrittsöffnung im Hülsenabschnitt gepresst und tritt in den Zwischenraum zwischen dem Bohrloch und dem Kunststoffspreizdübel aus, um dort für eine zuverlässige Abdichtung des Bohrlochs zu sorgen. Das Dichtmittel breitet sich zwangsläufig auch in dem Zwischenraum zwischen dem Schaft der Schraube und der Innenwand des Hülsenabschnitts aus und sorgt auch in diesem Bereich für eine zuverlässige Abdichtung. Der Folienbeutel kann unmittelbar nach der Herstellung des Kunststoffspreizdübels in diesen eingebracht werden. Der Folienbeutel kann aber auch erst unmittelbar vor dem Einbringen des Kunststoffspreizdübels in das Bohrloch in diesen eingebracht werden oder auch erst nach dem Einsetzen des Kunststoffspreizdübels in das Bohrloch in diesen eingebracht werden.

Das Einbringen des Dichtmittelvorrats kann mittels Einspritzen von Dichtmittel in das Sackloch bewirkt werden.

Auf diese Weise kann das Dichtmittel in besonders einfacher und frei dosierbarer Weise erfolgen. Das Einspritzen des Dichtmittels kann während der Herstellung des Kunststoffspreizdübels, unmittelbar vor Einbringen des Kunststoffspreizdübels in das Bohrloch oder auch erst nach dem Einbringen des Kunststoffspreizdübels in das Bohrloch erfolgen.

Das Verschließen des Sacklochs kann mittels einer sich über den Querschnitt des Sacklochs erstreckenden Membran vorgesehen sein.

Als Membran im Sinne der Erfindung werden neben Folienmembranen auch ein Verschlussstopfen oder verschlussstopfenartige Elemente verstanden. Vorteilhafterweise werden solche Membranen oder Verschlussstopfen beim Eindrehen der Schraube zerstört. Im Rahmen der Erfindung kann auch vorgesehen sein, dass der Verschlussstopfen vor dem Eindrehen der Schraube entfernt wird.

Das der Erfindung zugrunde liegende Problem wird durch eine Anordnung mit einem erfindungsgemäßen Kunststoffspreizdübel, einer Schraube und einem Bohrloch in einem Gegenstand, insbesondere einer Gebäudewand, gelöst, wobei der Kunststoffspreizdübel wenigstens abschnittsweise in dem Bohrloch und die Schraube abschnittsweise in dem Kunststoffspreizdübel angeordnet ist, bei der in der wenigstens einen Durchtrittsöffnung des Hülsenabschnitts Dichtmittel angeordnet ist sowie wenigstens abschnittsweise zwischen einer Umfangswand des Hülsenabschnitts und dem Bohrloch.

Das Dichtmittel zwischen der Umfangswand des Hülsenabschnitts und dem Bohrloch sorgt für eine zuverlässige Abdichtung des Bohrlochs gegenüber eintretender Feuchtigkeit. Zwangsläufig ist das Dichtmittel auch in der wenigstens einen Durchtrittsöffnung des Hülsenabschnitts angeordnet und verhindert dadurch auch das Eindringen von Feuchtigkeit in oder durch die Durchtrittsöffnung. Zwangsläufig ist das Dichtmittel auch in einem Bereich zwischen dem Schaft der Schraube und der Innenwand des Kunststoffspreizdübels, zumindest im Hülsenabschnitt, angeordnet und sorgt auch hier für eine zuverlässige Abdichtung gegenüber eintretender Feuchtigkeit.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, beschriebenen und dargestellten Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang beschrieben oder dargestellt sind. In den Zeichnungen zeigen:
Fig. 1 eine teilweise geschnittene Darstellung einer erfindungsgemäßen Anordnung,
Fig. 2 eine schematische Schnittansicht eines Kunststoffspreizdübels gemäß einer weiteren Ausführungsform der Erfindung,
Fig. 3 eine schematische Schnittansicht eines Kunststoffspreizdübels gemäß einer weiteren Ausführungsform der Erfindung und
Fig. 4 eine schematische Schnittansicht eines Kunststoffspreizdübels gemäß einer weiteren Ausführungsform der Erfindung.

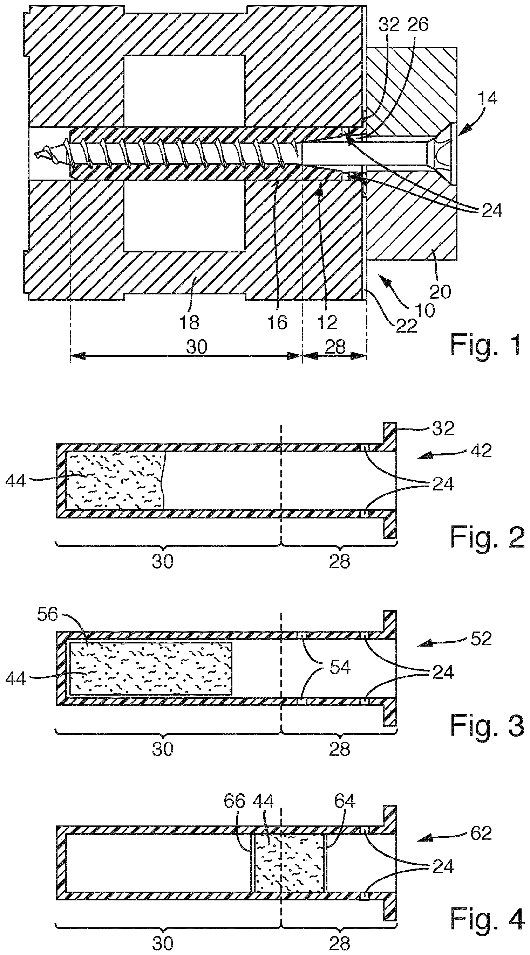

Fig. 1 zeigt in teilweise geschnittener Darstellung eine erfindungsgemäße Anordnung 10 mit einem erfindungsgemäßen Kunststoffspreizdübel 12, einer Schraube 14 und einem Bohrloch 16 in einem Gegenstand, hier speziell einer Gebäudewand 18. Die Anordnung weist darüber hinaus einen zu befestigenden Gegenstand 20 auf, beispielsweise einen Haken, einen Spiegel oder dergleichen.

Die erfindungsgemäße Anordnung ist speziell für Räume mit erhöhter Feuchtigkeit geeignet, also beispielsweise Bäder, Duschen, Küchen oder dergleichen, aber beispielsweise auch für die Befestigung von Gegenständen an Außenwänden, insbesondere in Küstennähe.

Problematisch bei Räumen mit erhöhter Feuchtigkeit ist, dass die Gebäudewand 18 gegenüber dem Eindringen von Feuchtigkeit geschützt werden muss. Dies kann durch die Verwendung von speziellen Abdichtungen erreicht werden, beispielsweise Membranen, Anstrichen oder dergleichen, die auf die Gebäudewand aufgebracht werden. Eine solche Abdichtung ist in Fig. 1 lediglich schematisch mit der Bezugsziffer 22 angedeutet. Die Abdichtung kann aber auch durch die Auswahl des Materials der Gebäudewand 18 selbst realisiert sein. Bei der dargestellten Ausführungsform besteht die Gebäudewand aus Hohllochsteinen. Wie ausgeführt wurde, soll verhindert werden, dass Feuchtigkeit aus dem Raum mit erhöhter Feuchtigkeit, der in Fig. 1 rechts der Gebäudewand 18 angeordnet wäre, in die Gebäudewand 18 eintritt.

Durch das Herstellen des Bohrlochs 16 wird die Abdichtung 22 zwangsläufig punktuell verletzt. Der erfindungsgemäße Kunststoffspreizdübel 12 sorgt nun dafür, dass der Zwischenraum zwischen dem Bohrloch 16, also der Wand des Bohrlochs 16, und dem Kunststoffspreizdübel 12, also der Außenwand des Kunststoffspreizdübels 12, sicher gegen eindringende Feuchtigkeit abgedichtet ist. Gleichzeitig ist bei der erfindungsgemäßen Anordnung auch dafür gesorgt, dass ein Bereich zwischen dem Schaft der Schraube 14 und der Innenwand des Kunststoffspreizdübels 12 im Bereich des in Fig. 1 rechts angeordneten Endes des Kunststoffspreizdübels 12 sicher gegen eindringende Feuchtigkeit abgedichtet ist.

Dies wird dadurch bewirkt, dass, siehe auch die Fig. 2 bis 4, vor dem Eindrehen der Schraube 14 in dem Kunststoffspreizdübel 12 und speziell in dem durch den Kunststoffspreizdübel 12 gebildeten Sackloch ein Dichtmittelvorrat angeordnet wird, der dann beim Eindrehen der Schraube 14 verdrängt wird und durch zwei Durchtrittsöffnungen 24 aus dem Sackloch des Kunststoffspreizdübels 12 austritt, in den Bereich zwischen dem Bohrloch 16 und dem Kunststoffspreizdübel 12 gelangt und dort für eine zuverlässige Abdichtung des Bohrlochs sorgt. In dem in Fig. 1 dargestellten Zustand der Anordnung 10 befindet sich Dichtmittel somit zumindest zwischen dem rechts der Durchtrittsöffnungen 24 angeordneten Abschnitt der Außenwand des Kunststoffspreizdübels 12 und der Innenwand des Bohrlochs 16, also unmittelbar angrenzend an die Oberfläche der Gebäudewand 18, die Durchtrittsöffnungen 24 sind somit mit Dichtmittel gefüllt und auch ein Bereich 26 zwischen dem Schaft der Schraube 14 und dem Kunststoffspreizdübel 12 ist wenigstens in dem Bereich des in Fig. 1 rechts dargestellten Endes des Kunststoffspreizdübels 12 mit dem Dichtmittel gefüllt. Das Bohrloch 16 ist dadurch zuverlässig gegen Eindringen von Feuchtigkeit in die Gebäudewand 18 geschützt.

Der Kunststoffspreizdübel 12 weist einen nicht spreizbaren Hülsenabschnitt 28 und einen sich daran anschließenden Spreizabschnitt 30 auf. Beim Eindrehen der Schraube 14 wird der Spreizabschnitt aufgeweitet und dadurch mit seiner Außenwand gegen die Innenwand des Bohrlochs gepresst. Dadurch wird der Kunststoffspreizdübel 12 sicher in dem Bohrloch verankert, so dass ein Ausziehen der Schraube 14 in Fig. 1 in einer Richtung nach rechts aus dem Bohrloch verhindert ist.

Der Hülsenabschnitt 28 ist nicht spreizbar. Die Länge des Hülsenabschnitts 28 und die Länge des Spreizabschnitts 30 können dabei variieren. Speziell kann der Hülsenabschnitt 28 kürzer als in der Darstellung der Fig. 1 gewählt werden, um bereits kurz nach Beginn des Bohrlochs eine Aufweitung des Spreizabschnitts 30 und dadurch eine sichere Verankerung in der Gebäudewand 18 zu bewirken. Dies ist insbesondere bei Gebäudewänden 18 aus Hohllochsteinen sinnvoll, da die Stege der Hohllochsteine der Gebäudewand 18 vergleichsweise dünn sind. Bei dem erfindungsgemäßen Kunststoffspreizdübel ist aber immer ein nicht aufweitbarer Hülsenabschnitt am offenen Ende des Kunststoffspreizdübels 12 vorhanden. Dadurch soll verhindert werden, dass die Gebäudewand 18 bereits unmittelbar hinter ihrer Oberfläche durch Spreizkräfte beaufschlagt wird und dadurch aufbricht.

Der Hülsenabschnitt 28 ist an seinem in Fig. 1 rechts dargestellten Ende, das dem rechten, offenen Ende des Kunststoffspreizdübels 12 entspricht, mit einem sich in radialer Richtung erstreckenden und umlaufenden Dichtkragen 32 versehen. Dieser Dichtkragen 32 erstreckt sich in radialer Richtung über das Bohrloch hinaus und liegt dadurch auf der Außenseite der Gebäudewand 18 bzw. auf der Außenseite der Abdichtung 22 auf. Mittels eines solchen Dichtkragens 32 kann eine Abdichtung des Bohrlochs verbessert werden. Der Dichtkragen 32 kann aus gummielastischem Material bestehen, auf seiner, der Gebäudewand 18 zugewandten Seite mit einer gummielastischen Beschichtung versehen sein oder es kann eine Gummischeibe zwischen dem Dichtkragen 32 und der Gebäudewand 18 angeordnet sein.

Der Kunststoffspreizdübel 12 ist in einem Zustand, in dem die Schraube 14 noch nicht in den Kunststoffspreizdübel 12 eingeschraubt ist, an seinem, in Fig. 1 linken Ende verschlossen. In diesem Zustand bilden also der Hülsenabschnitt 28 und der Spreizabschnitt 30 ein Sackloch, das am Ende des Spreizabschnitts, in Fig. 1 also am linken Ende des Kunststoffspreizdübels 12, verschlossen ist. Die Durchtrittsöffnungen 24 sind in einem ersten Endbereich des Hülsenabschnitts 28 vorgesehen, der vom offenen und in Fig. 1 rechts dargestellten Ende des Kunststoffspreizdübels 12 ausgeht. Im Rahmen der Erfindung können die Durchtrittsöffnungen 24 auch in einem mittleren Bereich oder einem zweiten Endbereich des Hülsenabschnitts 28 angeordnet sein, wobei der zweite Endbereich dann an den Spreizabschnitt 30 angrenzt. Es können auch mehrere Durchtrittsöffnungen 24 im Bereich des Hülsenabschnitts 28 vorgesehen sein, also beispielsweise Durchtrittsöffnungen 24 im ersten Endbereich, im mittleren Endbereich und/oder zweiten Endbereich.

Die Darstellung der Fig. 2 zeigt einen erfindungsgemäßen Kunststoffspreizdübel 42 gemäß einer weiteren Ausführungsform, der lediglich schematisch dargestellt ist. Mit dem Kunststoffspreizdübel 12 der Fig. 1 funktionsgleiche oder identische Elemente werden nicht erneut beschrieben.

Der Kunststoffspreizdübel 42 weist wieder einen Hülsenabschnitt 28 und einen Spreizabschnitt 30 auf. Der Hülsenabschnitt 28 ist auch mit einem umlaufenden Dichtkragen 32 versehen und in einem ersten Endbereich des Hülsenabschnitts 28 sind mehrere Durchtrittsöffnungen 24 für Dichtmittel vorgesehen. Insofern ist der Spreizdübel 42 gleich aufgebaut wie der Kunststoffspreizdübel 12 der Fig. 1. Der Kunststoffspreizdübel 42 ist in einem Zustand gezeigt, in dem die Schraube 14 noch nicht in diesen eingesetzt wurde. In diesem Zustand weist das von dem Spreizabschnitt 30 definierte Sackloch eine geschlossene Wand auf und ist insbesondere auch an dem in Fig. 2 links dargestellten Ende des Kunststoffspreizdübels 42 dicht verschlossen. Der Hülsenabschnitt 28 weist eine mit Ausnahme der Durchtrittsöffnungen 24 geschlossene Umfangswand auf. Die Durchtrittsöffnungen 24 können dabei vor dem Eindrehen der Schraube 14 ebenfalls mit einer dünnen Membran, beispielsweise einer beim Herstellen des Kunststoffspreizdübels 42 ausgebildeten dünnen Kunststoffmembran, verschlossen sein. Beim Eindrehen der Schraube werden diese Membranen dann durch den Druck des austretenden Dichtmittels aufgerissen. Hierbei muss selbstverständlich darauf geachtet werden, dass der durch das Eindrehen der Schraube aufgebaute Druck so groß ist, dass einerseits die Membranen aufreißen und andererseits nicht der vollständige Dichtmittelvorrat aus dem in Fig. 2 rechts dargestellten offenen Ende des Kunststoffspreizdübels 42 zwischen dem Schaft der Schraube und dem Kunststoffspreizdübel 42 austritt. Gegebenenfalls kann der Kunststoffspreizdübel 42 an seiner Innenwand eine oder mehrere Dichtmittel, beispielsweise Dichtlippen, aufweisen, um den Zwischenraum zwischen dem Schaft der Schraube 14 und dem Kunststoffspreizdübel 42 abzudichten.

In dem durch den Kunststoffspreizdübel 42 gebildeten Sackloch ist ein Dichtmittelvorrat 44 angeordnet. Dieser Dichtmittelvorrat 44 ist am geschlossenen Ende des Sacklochs angeordnet. Beim Eindrehen einer Schraube in das Sackloch des Kunststoffspreizdübels 42 wird das Dichtmittel aus dem Dichtmittelvorrat 44 infolgedessen verdrängt, wird sich in Fig. 2 nach rechts in dem Zwischenraum zwischen dem Schaft der Schraube und der Innenwand des Kunststoffspreizdübels 42 ausbreiten und bis in den Bereich der Durchtrittsöffnungen 24 gelangen. Das offene Ende des Kunststoffspreizdübels 42 ist durch den Schaft der Schraube ausreichend dicht verschlossen, um das Dichtmittel dann durch die Durchtrittsöffnungen 24 hindurchzudrücken. Das Dichtmittel 24 kann sich dann, vgl. Fig. 1, in dem Zwischenraum zwischen dem Kunststoffspreizdübel 42 und dem Bohrloch 16 anordnen und dadurch für eine zuverlässige Abdichtung des Bohrlochs sorgen. Auch in dem Bereich zwischen dem Schaft der Schraube und der Innenwand des Hülsenabschnitts 28 ist das Dichtmittel dann angeordnet, vgl. Fig. 1, und sorgt auch in diesem Bereich für eine zuverlässige Abdichtung. Der Dichtkragen 32 verhindert, dass Dichtmittel auf die Oberfläche der Gebäudewand 18 austritt.

Der Dichtmittelvorrat 44 kann im Rahmen der Erfindung bereits bei der Herstellung des Kunststoffspreizdübels 42 eingebracht werden, beispielsweise eingespritzt werden. Es muss dann dafür Sorge getragen werden, dass das Dichtmittel aus dem Dichtmittelvorrat 44 nicht vollständig austrocknet oder aushärtet, bis der Kunststoffspreizdübel 42 eingesetzt wird. Dies kann beispielsweise dadurch erfolgen, dass lediglich eine Grenzschicht des Dichtmittelvorrats 44 aushärtet oder austrocknet und dann zwischen dem geschlossenen Ende des Sacklochs und dieser Grenzschicht noch ein flüssiger oder pastöser Dichtmittelvorrat 44 verbleibt. Beim Eindrehen der Schraube wird die Grenzschicht dann aufgerissen und das Dichtmittel kann sich, wie beschrieben wurde, in dem Sackloch des Kunststoffspreizdübels 42 ausbreiten.

Im Rahmen der Erfindung kann der Dichtmittelvorrat 44 auch erst unmittelbar vor dem Einsetzen des Kunststoffspreizdübels 42 in das Bohrloch eingespritzt werden oder auch erst nach dem Einsetzen des Kunststoffspreizdübels 42 in das Bohrloch.

Fig. 3 zeigt einen erfindungsgemäßen Kunststoffspreizdübel 52 gemäß einer weiteren Ausführungsform. Funktionsgleiche oder identische Elemente des Kunststoffspreizdübels 52 zu den Kunststoffspreizdübeln 12, 42 werden nicht erneut beschrieben. Vielmehr werden lediglich die zu den Kunststoffspreizdübeln 12, 42 unterschiedlichen Merkmale erläutert. Der Kunststoffspreizdübel 52 weist im Hülsenabschnitt 28 neben den Durchtrittsöffnungen 24 im ersten Endbereich weitere Durchtrittsöffnungen 54 im zweiten Endbereich auf. Der zweite Endbereich grenzt an den Spreizabschnitt 30 an. Durch die Durchtrittsöffnungen 54 kann somit auch Dichtmittel in einem Grenzbereich zwischen dem Hülsenabschnitt 28 und dem Spreizabschnitt 30 in den Zwischenraum zwischen dem Kunststoffspreizdübel 52 und dem Bohrloch austreten.

Im Bereich des Spreizabschnitts 30 ist in dem Sackloch des Kunststoffspreizdübels 52 ein Dichtmittelvorrat 44 angeordnet, der in einem im Zustand der Fig. 3 verschlossenen Folienbeutel 56 aufgenommen ist. Der Folienbeutel 56 verhindert, dass der Dichtmittelvorrat 44 austrocknet oder aushärtet. Beim Eindrehen der Schraube in den Kunststoffspreizdübel 52 reißt der Folienbeutel 56 auf und das Dichtmittel kann sich in der beschriebenen Art und Weise in dem Sackloch ausbreiten und durch die Durchtrittsöffnungen 54, 24 austreten. Im montierten Zustand des Kunststoffdübels 52, also dann, wenn der Kunststoffspreizdübel 52 in einem Bohrloch angeordnet und eine Schraube in den Kunststoffspreizdübel 52 eingedreht ist, wird der Zwischenraum zwischen dem Hülsenabschnitt 28 und dem Bohrloch somit im Wesentlichen über die gesamte Länge des Hülsenabschnitts 28 mit Dichtmittel ausgefüllt und dadurch gegen eindringende Feuchtigkeit abgedichtet.

Fig. 4 zeigt schematisch einen erfindungsgemäßen Kunststoffspreizdübel 62 gemäß einer weiteren Ausführungsform der Erfindung. Wieder werden lediglich gegenüber den bereits erläuterten Spreizdübeln 12, 42, 52 unterschiedliche Merkmale erörtert, um Wiederholungen zu vermeiden.

Der Kunststoffspreizdübel 62 ist im Inneren seines Sacklochs mit einem Dichtmittelvorrat 44 versehen, wobei der Dichtmittelvorrat 44 zwischen zwei Membranen 64, 66 angeordnet ist, die in Längsrichtung des Kunststoffspreizdübels 62 voneinander beabstandet sind und die sich jeweils über den vollständigen Querschnitt des Sacklochs des Kunststoffspreizdübels 62 erstrecken. Die erste Membran 64 ist im mittleren Bereich des Hülsenabschnitts 28 angeordnet und die zweite Membran 66 ist bereits im Spreizabschnitt 30 angeordnet. Die erste und die zweite Membran 64, 66 sind so angeordnet, dass in dem Zwischenraum zwischen den beiden Membranen 64, 66 keine Durchtrittsöffnung 24, 54 in der Umfangswand des Kunststoffspreizdübels 62 angeordnet ist, so dass der Dichtmittelvorrat 44 nicht in Kontakt mit der Umgebung ist und nicht austrocknet oder aushärtet.

Der Kunststoffspreizdübel 62 wird in dem in Fig. 4 dargestellten Zustand in ein Bohrloch gesteckt. Wird dann eine Schraube in den Kunststoffspreizdübel 62 eingedreht, wird zunächst die Membran 64 zerstört und nachfolgend die Membran 66. Das Dichtmittel des Dichtmittelvorrats 44 kann dann entlang dem Schaft der Schraube sich in Richtung des offenen Endes des Kunststoffspreizdübels 62 ausbreiten und dann letztendlich auch durch die Durchtrittsöffnungen 24 in den Zwischenraum zwischen dem Bohrloch und dem Kunststoffspreizdübel 62 eintreten.

Anstelle von zwei Membranen 64, 66 kann auch lediglich eine einzige Membran vorgesehen sein. Der Dichtmittelvorrat 44 ist dann zwischen der einzigen Membran und dem in Fig. 4 links dargestellten Ende des Sacklochs des Kunststoffspreizdübels 62 angeordnet.

Im Rahmen der Erfindung ist unter einer Membran 64, 66 eine folienartige Membran zu verstehen, die durch das Eindrehen einer Schraube in den Kunststoffspreizdübel 62 zerstört wird. Im Rahmen der Erfindung ist unter einer Membran aber auch ein Verschlussstopfen oder dergleichen zu verstehen, der nach dem Einfüllen des Dichtmittelvorrats 44 in das Sackloch des Kunststoffspreizdübels 62 ebenfalls in das Sackloch eingesetzt wird und von einer Schraube durchdrungen und dadurch zerstört werden kann. Vorgesehen ist im Rahmen der Erfindung auch, dass ein Verschlussstopfen nach dem Einfüllen eines Dichtmittelvorrats eingesetzt wird und dieser Verschlussstopfen dann vor dem Eindrehen einer Schraube wieder entnommen wird. Eine solche Lösung ist technisch realisierbar, im Hinblick auf die Handhabung des Kunststoffspreizdübels aber umständlicher.

Als Dichtmittel im Dichtmittelvorrat 44 kann beispielsweise Silikon eingesetzt werden.

Im Hülsenabschnitt und/oder im Spreizabschnitt des Kunststoffspreizdübels kann auf der Innenseite des Kunststoffspreizdübels mindestens eine Nut vorgesehen sein, die sich ausgehend von der Innenwand des Kunststoffspreizdübels aus radial nach außen erstreckt. Die Tiefe der Nut ist kleiner ist als die Wandstärke des Kunststoffspreizdübels, so dass keine Durchbrechung der Wand des Kunststoffspreizdübels durch die Nut erfolgt. Eine oder mehrere solcher Nuten können trotz einer in den Kunststoffspreizdübel abschnittsweise eingedrehten Schraube für eine Verteilung des Dichtmittels in Richtung der Bohrlochöffnung vorzugsweise bis zu der mindestens einen Durchtrittsöffnung 24, 54 sorgen. Die Nut oder die mehreren Nuten können in axialer Richtung oder auch schräg oder wendelförmig verlaufen.

Auf der Außenseite des Kunststoffspreizdübels können in der Umfangswand des Hülsenabschnitts 28 eine oder mehrere Nuten vorgesehen sein, vorzugsweise vollumfänglich, und jeweils mindestens eine Durchtrittsöffnung 24, 54 umfassend, um das Dichtmittel über den gesamten Umfang zwischen dem Kunststoffspreizdübel und der Bohrlochwand zu verteilen, so dass eine Abdichtung über den gesamten Umfang des Bohrlochs durch das Dichtmittel zwischen dem Kunststoffspreizdübel und der Bohrlochwand sichergestellt ist.

## Patentansprüche

1. Anordnung mit einem Kunststoffspreizdübel (12; 42; 52; 62) wobei der Kunststoffspreizdübel (12; 42; 52; 62) mit einem nicht spreizbaren Hülsenabschnitt (28) und einem, sich ausgehend vom Hülsenabschnitt (28) erstreckenden Spreizabschnitt (30) versehen ist, wobei der Hülsenabschnitt (28) und der Spreizabschnitt (30) ein Sackloch definieren, wobei das Sackloch im Spreizabschnitt eine geschlossene Wand aufweist und wobei in der Umfangswand des Hülsenabschnitts (28) wenigstens eine Durchtrittsöffnung (24, 54) für Dichtmittel vorgesehen ist, wobei die wenigstens eine Durchtrittsöffnung (24) im ersten Endbereich des Hülsenabschnitts (28) vorgesehen ist, wobei der erste Endbereich des Hülsenabschnitts (28) an ein offenes Ende des Kunststoffspreizdübels (12; 42; 52; 62) angrenzt und wobei in dem Sackloch ein Dichtmittelvorrat (44), insbesondere Silikon, angeordnet ist, mit einer Schraube (14) und mit einem Bohrloch (16) in einem Gegenstand, insbesondere einer Gebäudewand (18), wobei der Kunststoffspreizdübel (12; 42; 52; 62) wenigstens abschnittsweise in dem Bohrloch (16) und die Schraube (14) abschnittsweise in dem Kunststoffspreizdübel (12; 42; 52; 62) angeordnet ist, **dadurch gekennzeichnet, dass** in der wenigstens einen Durchtrittsöffnung (24; 54) des Hülsenabschnitts (28) sowie wenigstens abschnittsweise zwischen einer Umfangswand des Hülsenabschnitts (28) und dem Bohrloch (16) Dichtmittel angeordnet ist, wobei sich das Dichtmittel unmittelbar nach dem Austritt aus der Durchtrittsöffnung zwischen der Innenwand des Bohrlochs und der Außenwand des Kunststoffspreizdübels ausgebreitet hat und damit unmittelbar zu Beginn des Bohrlochs für eine zuverlässige Abdichtung sorgt.

2. Anordnung nach Anspruch 1, **dadurch gekennzeichnet, dass** zwischen dem Schaft der Schraube (14) und der Umfangswand des Hülsenabschnitts (28) wenigstens abschnittsweise Dichtmittel angeordnet ist.

3. Anordnung nach Anspruch 1 oder 2, **dadurch gekennzeichnet, dass** wenigstens eine weitere Durchtrittsöffnung (54) in einem mittleren Bereich und/oder in einem zweiten Endbereich des Hülsenabschnitts (28) vorgesehen ist, wobei der zweite Endbereich des Hülsenabschnitts (28) an den Spreizbereich (30) angrenzt.

4. Anordnung nach einem der vorstehenden Ansprüche, **dadurch gekennzeichnet, dass** der Dichtmittelvorrat (44) in einem Folienbeutel (56) angeordnet ist, der im Sackloch positioniert ist.

5. Anordnung nach einem der vorstehenden Ansprüche, **dadurch gekennzeichnet, dass** der Dichtmittelvorrat (44) zwischen einem geschlossenen Ende des Sacklochs und einer sich über den Querschnitt des Sacklochs erstreckenden Membran oder zwischen zwei sich über den Querschnitt des Sacklochs erstreckenden Membranen (64; 66) angeordnet ist.

6. Anordnung nach wenigstens einem der vorstehenden Ansprüche, **dadurch gekennzeichnet, dass** am offenen Ende des Kunststoffspreizdübel (12; 42; 52; 62) ein umlaufender, sich in radialer Richtung erstreckender Dichtkragen (32) vorgesehen ist, der insbesondere wenigstens abschnittsweise aus gummielastischem Material besteht oder mit einer Dichtscheibe aus gummielastischem Material versehen ist.

7. Anordnung nach wenigstens einem der vorstehenden Ansprüche, **dadurch gekennzeichnet, dass** der Kunststoffspreizdübel (12; 42; 52; 62) aus zwei verschiedenen Kunststoffmaterialen gebildet ist, wobei insbesondere wenigstens eines der Kunststoffmaterialien ein gummielastisches Material ist.

8. Anordnung nach Anspruch 7, **dadurch gekennzeichnet, dass** der Kunststoffspreizdübel (12; 42; 52; 62) mittels eines zwei Komponenten Spritzverfahrens hergestellt ist.

## Claims

1. Arrangement comprising a plastics expansion dowel (12; 42; 52; 62), the plastics expansion dowel (12; 42; 52; 62) being provided with a non-expandable sleeve portion (28) and an expansion portion (30) extending from the sleeve portion (28), the sleeve portion (28) and the expansion portion (30) defining a blind hole, the blind hole having a closed wall in the expansion portion and at least one through-opening (24; 54) for sealant being provided in the circumferential wall of the sleeve portion (28), the at least one through-opening (24) being provided in the first end region of the sleeve portion (28), the first end region of the sleeve portion (28) adjoining an open end of the plastics expansion dowel (12; 42; 52; 62) and a sealant store (44), in particular silicone, being arranged in the blind hole, comprising a screw (14) and comprising a borehole (16) in an object, in particular a building wall (18), the plastics expansion dowel (12; 42; 52; 62) being arranged at least in certain portions in the borehole (16) and the screw (14) being arranged in certain portions in the plastics expansion dowel (12; 42; 52; 62), **characterized in that** sealant is arranged in the at least one through-opening (24; 54) of the sleeve portion (28) and at least in certain portions between a circumferential wall of the sleeve portion (28) and the borehole (16), the sealant having propagated directly after it leaves the through-opening between the inner wall of the borehole and the outer wall of the plastics expansion dowel and thus ensuring a reliable seal directly at the beginning of the borehole.

2. Arrangement according to Claim 1, **characterized in that** sealant is arranged at least in certain portions between the shank of the screw (14) and the circumferential wall of the sleeve portion (28).

3. Arrangement according to Claim 1 or 2, **characterized in that** at least one further through-opening (54) is provided in a central region and/or in a second end region of the sleeve portion (28), the second end region of the sleeve portion (28) adjoining the expansion region (30).

4. Arrangement according to one of the preceding claims, **characterized in that** the sealant store (44) is arranged in a film pouch (56), which is positioned in the blind hole.

5. Arrangement according to one of the preceding claims, **characterized in that** the sealant store (44) is arranged between a closed end of the blind hole and a membrane extending over the cross section of the blind hole, or between two membranes (64; 66) extending over the cross section of the blind hole.

6. Arrangement according to at least one of the preceding claims, **characterized in that** an encircling, radially extending sealing collar (32), which in particular at least in certain portions consists of resiliently elastic material or is provided with a sealing disc made of resiliently elastic material, is provided at the open end of the plastics expansion dowel (12; 42; 52; 62) .

7. Arrangement according to at least one of the preceding claims, **characterized in that** the plastics expansion dowel (12; 42; 52; 62) is made of two different plastics materials, in particular at least one of the plastics materials being a resiliently elastic material.

8. Arrangement according to Claim 7, **characterized in that** the plastics expansion dowel (12; 42; 52; 62) is produced by means of a two-component injection moulding process.

## Revendications

1. Agencement avec une cheville d'expansion en matière plastique (12 ; 42 ; 52 ; 62), la cheville d'expansion en matière plastique (12 ; 42 ; 52 ; 62) étant pourvue d'une section de douille non expansible (28) et d'une section d'expansion (30) s'étendant à partir de la section de douille (28), la section de douille (28) et la section d'expansion (30) définissant un trou borgne, le trou borgne dans la section d'expansion présentant une paroi fermée, et au moins une ouverture de passage (24, 54) pour un moyen d'étanchéité étant prévue dans la paroi périphérique de la section de douille (28), l'au moins une ouverture de passage (24) étant prévue dans la première zone d'extrémité de la section de douille (28), la première zone d'extrémité de la section de douille (28) étant adjacente à une extrémité ouverte de la cheville d'expansion en matière plastique (12 ; 42 ; 52 ; 62), et une réserve de moyen d'étanchéité (44), notamment de la silicone, étant agencée dans le trou borgne, avec une vis (14) et avec un trou de perçage (16) dans un objet, notamment un mur de bâtiment (18), la cheville d'expansion en matière plastique (12 ; 42 ; 52 ; 62) étant agencée au moins par sections dans le trou de perçage (16) et la vis (14) étant agencée par sections dans la cheville d'expansion en matière plastique (12 ; 42 ; 52 ; 62), **caractérisée en ce qu'**un moyen d'étanchéité est agencé dans l'au moins une ouverture de passage (24 ; 54) de la section de douille (28) ainsi qu'au moins par sections entre une paroi périphérique de la section de douille (28) et le trou de perçage (16), l'agent d'étanchéité s'étant étendu immédiatement après la sortie de l'ouverture de passage entre la paroi intérieure du trou de perçage et la paroi extérieure de la cheville d'expansion en matière plastique et assurant ainsi une étanchéité fiable immédiatement au début du trou de perçage.

2. Agencement selon la revendication 1, **caractérisé en ce qu'**un moyen d'étanchéité est agencé au moins par sections entre la tige de la vis (14) et la paroi périphérique de la section de douille (28).

3. Agencement selon la revendication 1 ou 2, **caractérisé en ce qu'**au moins une autre ouverture de passage (54) est prévue dans une zone centrale et/ou dans une deuxième zone d'extrémité de la section de douille (28), la deuxième zone d'extrémité de la section de douille (28) étant adjacente à la zone d'expansion (30).

4. Agencement selon l'une quelconque des revendications précédentes, **caractérisé en ce que** la réserve de moyen d'étanchéité (44) est agencée dans un sac en film (56) positionné dans le trou borgne.

5. Agencement selon l'une quelconque des revendications précédentes, **caractérisé en ce que** la réserve de moyen d'étanchéité (44) est agencée entre une extrémité fermée du trou borgne et une membrane s'étendant sur la section transversale du trou borgne ou entre deux membranes (64 ; 66) s'étendant sur la section transversale du trou borgne.

6. Agencement selon au moins l'une quelconque des revendications précédentes, **caractérisé en ce qu'**il est prévu, à l'extrémité ouverte de la cheville d'expansion en matière plastique (12 ; 42 ; 52 ; 62), une collerette d'étanchéité (32) périphérique s'étendant dans la direction radiale, qui est notamment constituée au moins par sections d'un matériau ayant l'élasticité du caoutchouc ou est pourvue d'une rondelle d'étanchéité en un matériau ayant l'élasticité du caoutchouc.

7. Agencement selon au moins l'une quelconque des revendications précédentes, **caractérisé en ce que** la cheville d'expansion en matière plastique (12 ; 42 ; 52 ; 62) est formée de deux matériaux plastiques différents, au moins l'un des matériaux plastiques étant notamment un matériau ayant l'élasticité du caoutchouc.

8. Agencement selon la revendication 7, **caractérisé en ce que** la cheville d'expansion en matière plastique (12 ; 42 ; 52 ; 62) est fabriquée au moyen d'un procédé d'injection à deux composants.
